(19) **Europäisches Patentamt**
**European Patent Office**
**Office européen des brevets**

(11) **EP 1 430 273 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **02767104.9**

(22) Anmeldetag: **16.08.2002**

(51) Int Cl.:
***G01C 21/34*** *(2006.01)*

(86) Internationale Anmeldenummer:
**PCT/DE2002/002997**

(87) Internationale Veröffentlichungsnummer:
**WO 2003/027612 (03.04.2003 Gazette 2003/14)**

(54) **VERFAHREN ZUR AUTOMATISCHEN BERECHNUNG VON OPTIMALEN ROUTEN**

METHOD FOR THE AUTOMATIC CALCULATION OF OPTIMUM ROUTES

PROCEDE DE CALCUL AUTOMATIQUE D'ITINERAIRES OPTIMAUX

(84) Benannte Vertragsstaaten:
**AT BE BG CH CY CZ DE DK EE ES FI FR GB GR IE IT LI LU MC NL PT SE SK TR**

(30) Priorität: **14.09.2001 DE 10145299**

(43) Veröffentlichungstag der Anmeldung:
**23.06.2004 Patentblatt 2004/26**

(73) Patentinhaber: **ROBERT BOSCH GMBH**
**70442 Stuttgart (DE)**

(72) Erfinder:
• **MUELLER, Guido**
**06484 Quedlinburg (DE)**

• **HOELING, Holger**
**30559 Hannover (DE)**

(56) Entgegenhaltungen:
**DE-A- 19 928 295**

• **KIRSON A M: "ROUTE PLANNING SYSTEM WITH USER SELECTABLE PREFERENCES" MOTOROLA TECHNICAL DEVELOPMENTS, MOTOROLA INC. SCHAUMBURG, ILLINOIS, US, Bd. 13, 1. Juli 1991 (1991-07-01), Seiten 58-59, XP000259107 ISSN: 0887-5286**

## Beschreibung

Die Erfindung betrifft ein Verfahren zur automatischen Berechnung von optimalen Routen in einem Verkehrswegenetz unter Berücksichtigung mindestens eines festgelegten eingeprägten Routenabschnitts, wobei das Verkehrswegenetz durch mit einem Widerstand bewertete Kanten für Verkehrswegeabschnitte und Knoten für die Kreuzungspunkte von Verkehrswegeabschnitten beschrieben ist und die zu berechnende Route von einer Startkante zu einer Zielkante verläuft, wobei zur Optimierung der Kanten von der Zielkante zu der Startkante in bezug auf den günstigsten Widerstand bewertet werden.

Die Erfindung betrifft ferner ein Computerprogramm mit Programmcodemitteln zur Durchführung des Verfahrens sowie ein Navigationssystem mit einer Recheneinheit und mit Programmcodemitteln zur Durchführung des Verfahrens.

In einem herkömmlichen Navigationssystem werden Routen in einem Verkehrswegenetz zwischen festgelegten Start- und Zielpunkten durch Optimierung bestimmt.

Ein Verkehrswegenetz ist hierbei für die mathematische Bearbeitung als Graph mit Kanten k für Straßenabschnitte und Knoten p für Verkehrsknotenpunkte dargestellt. Die Kanten repräsentieren die Straßen und die Knoten die Vermaschungspunkte des Straßennetzes. Da im realen Straßennetz der Verkehrsfluss gerichtet ist, wird eine Kante als gerichteter Vektor beschrieben.

Den Kanten werden Widerstände, sogenannte Streckenwiderstände zugeordnet. Der Streckenwiderstand stellt eine Messgröße für den Aufwand dar, von einem Knoten im Verkehrswegenetz zu einem anderen Knoten zu gelangen. Im einfachsten Fall kann als Streckenwiderstand direkt die Kantenlänge verwendet werden. Alternativ kann auch unter Annahme einer bestimmten Verkehrsgeschwindigkeit (langsam, mittel, schnell) die Fahrtzeit auf einer Kante als ihr Streckenwiderstand betrachtet werden. Es sind aber auch Optimierungsverfahren bekannt, in denen Fahrzeit, Länge und andere Größen miteinander verknüpft werden, um den Streckenwiderstand einer Kante im Graphen zu berechnen.

Es ist ferner bekannt und im Rahmen des zu schaffenden Verfahrens realisierbar, den Knoten jeweils einen Manöverwiderstand zuzuordnen.

Eine optimale Route von einem Startpunkt an einer Start-Kante zu einem Zielpunkt an einer Ziel-Kante wird von herkömmlichen Bestwege-Routenberechnungs-algorithmen so bestimmt, dass die Summe aller den Kanten der optimalen Route zugeordneten Streckenwiderstände ein Minimum aufweist.

Ein Standardalgorithmus zur Routenoptimierung ist in Ford, Moore beschrieben und wird nachfolgend näher erläutert.

Der bekannte Bestwege-Routenoptimierungsalgorithmus ist rückwärts iterierend, wobei alle Kanten im Graphen des Verkehrswegenetzes zwischen der Startkante und der Zielkante besucht und in bezug auf den günstigsten Widerstand zur Zielkante bewertet werden. Ausgehend von einer Zielkante wird hierbei in jedem Iterationsschritt der widerstandsmäßig günstigste Weg zu den in einer Liste aufgeführten, im vorherigen Iterationsschritt optimierten Kanten besucht. Als Ergebnis liefert das Verfahren von jeder Kante im Graphen die optimale Route zur Zielkante.

Die Berechnungsergebnisse werden in einer sogenannten Routentabelle abgespeichert, wobei für jede Kante im Graphen des Verkehrswegenetzes der Widerstand bis zur Zielkante und die in Zielrichtung folgende Nachfolgerkante angegeben wird. Als Initialisierungswert wird der Widerstand jeder Kante auf "unendlich" und die Nachfolgerkante auf "undefiniert" gesetzt. Für jede Kante ist jeweils ein Widerstand und eine Nachfolgekante in Richtung der entsprechenden Kante sowie ein Widerstand und eine Nachfolgerkante entgegen der Richtung der entsprechenden Kante abgespeichert.

Vor dem Start der iterativen Optimierung wird die Zielkante in der Routentabelle mit dem Widerstand Null initialisiert. Weiterhin wird die Zielkante in eine Abschlussliste für bereits optimierte Kanten eingetragen. Eine weitere Optimierungsliste wird zur Speicherung der in den nächsten Optimierungsschritten zu prüfenden Kanten benötigt. Diese Optimierungsliste ist zu Beginn des Verfahrens leer.

Nach der Initialisierung wird das Optimierungsverfahren gestartet, wobei alle in der Abschlussliste aufgeführten Kanten als fiktive Ist-Positionen eines Fahrzeuges betrachtet werden. Alle mit dieser Ist-Kante vermaschten Ankommer-Kanten werden einer Optimierungsprüfung unterzogen. Für die Optimierung wird angenommen, dass sich das Fahrzeug auf einer der Ankommer-Kanten mit der Fahrtrichtung zur Ist-Kante befindet. Als Optimierungsbedingung wird dann geprüft, ob der Widerstand der alten vorhandenen Route von der Ankommer-Kante schlechter als der Widerstand für die neue Route von der Ankommer-Kante unter Benutzung der Ist-Kante ist. Wenn sich die Route über die Ist-Kante als optimaler herausstellt, erfolgt die Optimierung durch Eintragen der entsprechenden optimalen Widerstände und Nachfolgerkanten für die jeweiligen Ankommer-Kanten.

Die Bedingung zur Optimierung der Widerstände lässt sich mathematisch wie folgt darstellen:

$$R_{RT,\ Ist\text{-}Kante} + R_{Kante,\ Ank\text{-}Kante} < R_{RT\text{-}alt,\ ANK\text{-}Kante,}$$

wobei

$R_{RT, \text{Ist-Kante}}$      der Widerstand aus der Routentabelle der^ betrachteten Ist-Kante zum Ziel,

$R_{\text{Kante, Ank-Kante}}$      der Kantenwiderstand einer mit der Ist-Kante vermaschten Ankommer-Kante und

$R_{RT\text{-alt, ANK-Kante}}$      der Widerstand aus der Routentabelle der mit der Ist-Kante vermaschten Ankommer-Kante zum Ziel

ist.

Eine Optimierung erfolgt, wenn die oben genannte Ungleichungs-Bedingung erfüllt ist, dass heißt der neue Widerstand der Ankommer-Kante kleiner als der alte Widerstand der Ankommer-Kante ist. Der Widerstand der Ankommer-Kante wird in der Routentabelle durch den neuen kleineren Wert ersetzt. Als Nachfolgerkante wird die Ist-Kante eingetragen und die optimierte Ankommer-Kante in die Abschlussliste aufgenommen.

Sind alle Kanten aus der Optimierungsliste, wie beschrieben, bearbeitet worden, so werden die Optimierungsliste und die Abschlussliste vertauscht. Der Ausgangspunkt für die nächsten Optimierungen sind die hier im letzten Schritt optimierten Kanten. Das Verfahren terminiert, wenn die Abschlussliste leer aufgefunden wird, dass heißt es keine im vorherigen Durchlauf optimierte Kanten mehr gab.

In herkömmlichen Navigationssystemen kann eine zu optimierende Route vom Benutzer zum Beispiel beeinflusst werden durch

- die Wahl von unterschiedlichen Optimierungskriterien, wie zum Beispiel eine kurze Route, schnelle Route oder Vermeidung von Autobahnen etc.;

- eine manuell oder per Verkehrstelematik bestimmte Beeinflussung von Straßenabschnitten, die dann bei der Berechnung der optimalen Route umfahren bzw. begünstigt werden;

- die Definition von einem oder mehreren Zwischenzielen, die dann der Reihe nach angefahren werden, um abschließend zu einem Zielpunkt zu führen.

Der Nutzer hat jedoch über die Definition von Zwischenzielen hinaus keine Möglichkeit, einen bestimmten Abschnitt seiner Route vorzuprägen, der unbedingt Bestandteil der Route zwischen der Start-Kante und der Ziel-Kante wird. So besteht zum Beispiel ein Bedarf, eine Route entlang touristischer Straßen als eingeprägten Routenabschnitt festzulegen. In verschiedenen Regionen werden nämlich bestimmte Straßen als touristische Straßen ausgewiesen, die entlang von prädestinierten Objekten verlaufen oder andere Besonderheiten aufweisen. So sind in Deutschland beispielsweise eine Wein-, Porzellan-, oder Alleenstraße sowie eine Straße der Romantik bekannt.

Ferner besteht ein Bedarf, externe Vorgaben von Routen festzulegen. Dies ist beispielsweise für Vorführungen sinnvoll, in denen der Nutzer auf seinem Weg zum Zielpunkt bestimmte Straßen nutzen soll.

Die Vorgabe eines zu nutzenden eingeprägten Routenabschnitts sollte aber nicht dogmatisch verpflichtend sein. Beim Abweichen von dem eingeprägten Routenabschnitt soll die Routenberechnung unter Berücksichtigung der örtlichen Gegebenheiten den Fahrer zurück auf den eingeprägten Routenabschnitt führen, jedoch nicht zwangsweise durch Wenden zurückführen (zwangsweises Wenden).

Ein vorheriges Einprägen von Routenabschnitten ist mit herkömmlichen Navigationssystemen nicht möglich.

Das Navigationssystem "TravelPilot DX-N" ermöglicht es einem Nutzer, eine Tour zu definieren, indem der eingeprägte Routenabschnitt durch Zwischenziele beschrieben wird. Mit den herkömmlichen Routenoptimierungsalgorithmen ist aber nicht garantiert, dass der eingeprägte Routenabschnitt durchgängig benutzt wird. Zudem wird bei diesem Navigationssystem zu keinem Zeitpunkt die Route von der aktuellen Fahrzeugposition zum Zielpunkt berechnet.

Aufgabe der Erfindung war es daher, ein verbessertes Verfahren zur automatischen Berechnung von optimalen Routen in einem Verkehrswegenetz unter Berücksichtigung mindestens eines festgelegten eingeprägten Routenabschnitts zu schaffen, bei dem die berechnete optimierte Route über einen möglichst großen Teil des eingeprägten Routenabschnitts führt und die einzelnen Routenabschnitte optimal sind.

Die Aufgabe wird erfindungsgemäß gelöst durch Optimieren der Route jeweils von der Startkante bis zu dem eingeprägten Routenabschnitt, in dem eingeprägten Routenabschnitt und von dem eingeprägten Routenabschnitt bis zur Zielkante.

Dies erfolgt vorzugsweise mit den Schritten:

a) Aufteilen der Route in zwei Routensegmente, wobei ein erstes Startroutensegment von der Startkante bis zu etwa dem Ende des eingeprägten Routenabschnitts und ein zweites Zielroutensegment von etwa dem Ende des eingeprägten Routenabschnitts bis zur Zielkante verläuft,

b) Optimierung der Routen separat jeweils für das Startroutensegment und für das Zielroutensegment, wobei für eine Ankommer-Kante, die mit der jeweils zu prüfenden Ist-Kante vermascht ist, eine Route als optimal festgelegt wird,

- entweder, wenn der Widerstand der bislang für die Ankommer-Kante als optimal festgelegten Route im jeweiligen Routensegment schlechter als der Widerstand der von der Ankommer-Kante ausgehenden neuen Route im jeweiligen Routensegment unter Benutzung der Ist-Kante ist,

- oder, wenn der Widerstand der bislang für die Ankommer-Kante als optimal festgelegten Route im jeweiligen Routensegment dem Widerstand der von der Ankommer-Kante ausgehenden neuen Route im jeweiligen Routensegment unter Benutzung der Ist-Kante entspricht und wenn der Gesamtwiderstand der bislang für die Ankommer-Kante in bezug auf die gesamte Route als optimal festgelegten Route schlechter als der Gesamtwiderstand der von der Ankommer-Kante ausgehenden neuen gesamten Route unter Benutzung der Ist-Kante ist,

c) Feststellen der optimalen Kante aus den Ergebnissen der Optimierung für das Startroutensegment und das Zielroutensegment.

Durch die Trennung der Optimierung in dem Startroutensegment und im Zielroutensegment wird eine optimale Routenführung zum eingeprägten Routenabschnitt, auf dem eingeprägten Routenabschnitt und eine optimale Routenführung vom eingeprägten Routenabschnitt zur Ziel-Kante gewährleistet.

Neben der bekannten Optimierungsbedingung, die jedoch beschränkt auf das jeweilige Routensegment und nicht auf die Gesamtroute angewendet wird, erfolgt eine Optimierung auch dann, wenn der neue Widerstand der Ankommer-Kante dem bisherigen Widerstand der Ankommer-Kante bezogen auf das jeweilige Routensegment entspricht und gleichzeitig der Gesamtwiderstand der Ankommer-Kante bezogen auf die gesamte Route besser als der bisherige Gesamtwiderstand der Ankommer-Kante für die Gesamtroute ist.

Diese Zusatzbedingung führt zu einer Routenführung nach Möglichkeit über den eingeprägten Routenabschnitt.

Das erfindungsgemäße Verfahren hat zudem den Vorteil, dass die vollständige Route zu jedem Zeitpunkt vorliegt und eine optimale Routenführung auch nach Änderung oder Manipulation des Verkehrswegenetzes zum Beispiel durch telematische Beeinflussung oder benutzerdefinierte Sperrung, oder nach einem Abweichen von der bisherigen Route sichergestellt wird.

Nach erfolgter Optimierung der beiden Start- und Zielroutensegmente werden die Ergebnisse der Start- und Zielroutensegmente in Form einer Routenliste zur optimalen Route zusammengestellt.

Es ist vorteilhaft, wenn das Verfahren in folgender Reihenfolge ausgeführt wird:

a) Optimierung der Route im Zielroutensegment;

b) Optimierung der Route im Startroutensegment;

c) Feststellen der optimalen Kante aus den Ergebnissen der Optimierung für das Startroutensegment und das Zielroutensegment.

Hierbei wird berücksichtigt, dass das Optimierungsverfahren rückwärts iterierend ausgeführt wird und von der Zielkante ausgeht.

Für das Startroutensegment und das Zielroutensegment wird vorteilhafterweise jeweils eine Routentabelle mit allen möglichen Kanten des Verkehrswegenetzes für die Route in dem jeweiligen Routensegment, für jede Kante mit jeweils einem Widerstand pro Richtung einer Kante, und pro Widerstand mit jeweils einer nachfolgenden Kantennummer initialisiert. Zur Initialisierung werden die Widerstände auf einen Extremwert und die nachfolgenden Kanten als "undefiniert" festgelegt. Durch den extrem hohen, vorzugsweise unendlichen Widerstand wird sichergestellt, dass zunächst die oben beschriebene Ungleichungs-Optimierungsbedingung erfüllt und alle Kanten zunächst aktualisiert werden.

Zur Optimierung der Route im Zielroutensegment erfolgt weiterhin eine Initialisierung der Ursprungskanten, von denen die Optimierung aus gestartet wird. Hierzu wird in der Routentabelle der Widerstand der Ursprungskanten zu Null und die zugehörige Nachfolgerkante auf "nicht vorhanden" gesetzt. Für das Zielroutensegment sind die Ursprungskanten alle Kanten, die zu einem Zielpunkt gehören.

Zur Optimierung der Route im Startroutensegment erfolgt die Initialisierung der Ursprungskanten auf andere Weise. Als Ursprungskante werden die Startkanten des Zielroutensegments mit dem geringsten Widerstand bis zur Zielkante verwendet. Der Gesamtwiderstand der Ursprungskanten wird auf den jeweils bei der Optimierung des Zielroutensegmentes für die Ursprungskante ermittelten Wert gesetzt. Die auf das Startroutensegment bezogenen Widerstände aller Kanten des eingeprägten Routenabschnitts werden auf Null gesetzt. Hierdurch wird erreicht, dass der eingeprägte Routenabschnitt bei der Routenoptimierung bevorzugt berücksichtigt wird.

Die Initialisierung wird vorzugsweise jeweils zu Beginn der Optimierung des Startroutensegmentes und des Zielroutensegmentes durchgeführt. Anschließend erfolgt das jeweilige Optimierungsverfahren.

Um die zum eingeprägten Routenabschnitt gehörigen Kanten zu erkennen, ist vorzugsweise eine Statuskennung in der Routentabelle für die entsprechenden Kanten des eingeprägten Routensegmentes vorgesehen.

Bei der Durchführung des Verfahrens ist es vorteilhaft, bereits optimierte Kanten in einer Abschlussliste zu speichern und auf die Abschlussliste zurückzugreifen. Vorzugsweise ist eine weitere Optimierungsliste zur Speicherung der im nächsten Optimierungsschritt zu prüfenden Kanten vorgesehen, die zu Beginn des Optimierungsverfahrens leer ist.

Das Optimierungsverfahren wird hierbei iterativ für die in der Abschlussliste eingetragenen Kanten durchgeführt, wobei diese eingetragenen Kanten als Ist-Kanten betrachtet werden. Für jede dieser Ist-Kanten werden die entsprechenden Ankommer-Kanten optimiert. Die im nächsten Optimierungsschritt zu prüfenden Kanten, die in die Optimierungsliste eingetragen werden, ergeben sich aus den Nachfolgerkanten der optimierten Ankommer-Kanten. Wenn die Optimierung für alle Ist-Kanten aus der Abschlussliste durchgeführt wurde, wird die Abschlussliste mit der Optimierungsliste getauscht. Die Optimierung wird beendet, wenn die Abschlussliste nach dem Tauschen der Listen leer bleibt, dass heißt keine Kanten mehr optimiert wurden.

Die Erfindung wird nachfolgend anhand der beigefügten Zeichnungen näher beschrieben. Es zeigen:

Figur 1 - Blockdiagramm eines herkömmlichen Navigationssystems zur automatischen Berechnung von optimalen Routen in einem Verkehrswegenetz;

Figur 2 - Graphendiagramm eines Verkehrswegenetzes mit eingeprägten Routenabschnitt;

Figur 3 - Graphendiagramm des Verkehrswegenetzes aus Figur 1 mit Routenoptimierungen nach einem herkömmlichen Optimierungsverfahren;

Figur 4 - schematische Darstellung der Aufteilung einer Route in ein Startroutensegment und ein Zielroutensegment;

Figur 5 - Flussdiagramm des erfindungsgemäßen Verfahrens zur automatischen Berechnung von optimalen Routen;

Figur 6 - Flussdiagramm des Verfahrens zur Optimierung der Route im Startroutensegment;

Figur 7 - Flussdiagramm des Verfahrens zur Optimierung der Route im Zielroutensegment;

Figur 8 - Graphendiagramm zur Optimierung einer betrachteten Ist-Kante mit zwei damit vermaschten Ankommer-Kanten;

Figur 9 - Flussdiagramm der Überprüfung der Optimierungsbedingungen;

Figur 10 - Flussdiagramm des Verfahrens zur Optimierung der Route eines Routensegmentes;

Figur 11 - Graphendiagramm eines Verkehrswegenetzes mit einem Fahrzeug an einer Startkante und mit einer Zielkante;

Figur 12 - Graphendiagramm aus Figur 11 mit einer optimierten Route nach einem ersten Optimierungsschritt;

Figur 13 - Graphendiagramm aus Figur 11 mit einer optimierten Route nach einem zweiten Optimierungsschritt;

Figur 14 - Skizze der Positionierung einer Route außerhalb eines eingeprägten Routenabschnitts;

Figur 15 - Skizze einer Route unter Nutzung eines Zwischenziels in einem eingeprägten Routenabschnitt;

Figur 16 - Skizze einer Route unter Nutzung eines Weggebiets;

Figur 17 - Route unter Nutzung eines eingeprägten Routenabschnitts, die nach dem erfindungsgemäßen Verfahren optimiert ist.

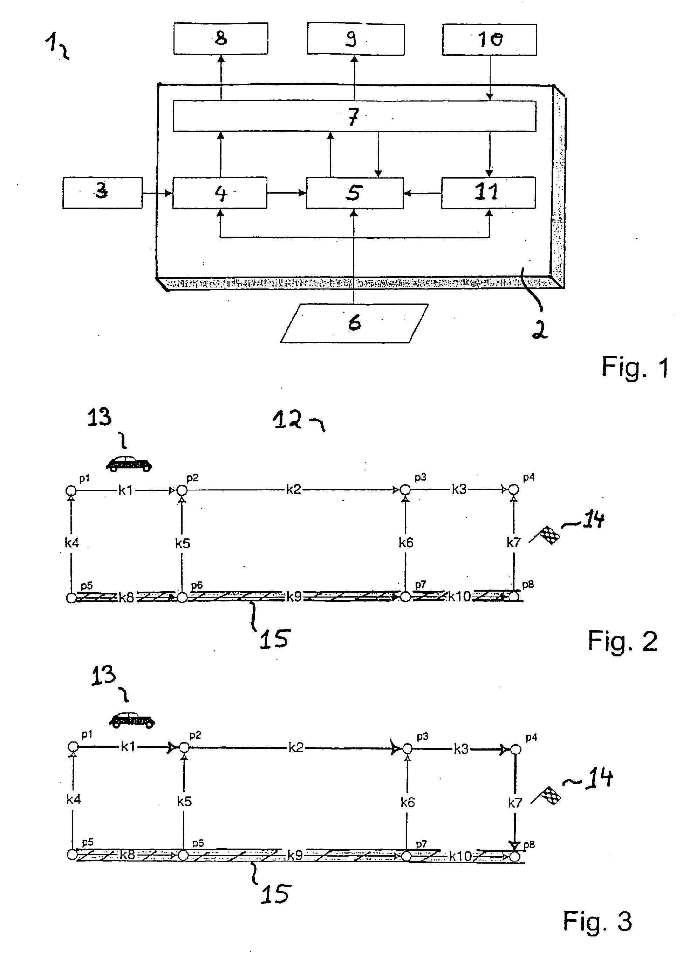

Die Figur 1 lässt ein herkömmliches Navigationssystem 1 mit einem Navigationsrechner 2 als Blockschaltbild erkennen. Die Position eines Fahrzeugs wird mit Hilfe geeigneter Sensoren 3, wie zum Beispiel einem Global Positioning System (GPS) und/oder Radsensoren etc., bestimmt und als Positionssignal an den Navigationsrechner 2 übertragen. Der Navigationsrechner 2 führt eine Ortung 4 durch. Das Ortungssignal wird für eine Routensuche 5 verwendet. Bei der Routensuche 5 erfolgt ein Zugriff zum Beispiel auf eine in einem Massenspeicher 6 abgelegten digitalen Karte. Die geortete Position, die Route und gegebenenfalls weitere Daten werden über ein Interface 7 an einen Lautsprecher 8, eine Anzeigeeinheit 9 und /oder anderer Ausgabegeräte gegeben. Es ist eine Eingabeeinheit 10 vorgesehen, um das Navigationssystem 1 zu bedienen und insbesondere eine Startposition und eine Zielposition festzulegen. Die Eingabeeinheit 10 ist über das Interface 7 mit der Routensuche 5 gekoppelt.

Über die Eingabeeinheit 10 und das Interface 7 können bestimmte Routenabschnitte vorgegeben werden, die bei der Optimierung einer Route zu berücksichtigen sind. Diese Vorgaben werden in einem Index 11 gespeichert, der mit der Routensuche 5 gekoppelt ist.

Der Index 11 und das Interface 7 ist erfindungsgemäß so angepasst, dass ein eingeprägter Routenabschnitt festgelegt werden kann.

Mit bekannten graphengestützten Bestwege-Routenoptimierungsalgorithmen wird eine optimale Route von dem eingegebenen Zielpunkt bis zu einem Startpunkt mit dem Navigationssystem 1 berechnet.

Die Figur 2 lässt ein Verkehrswegenetz 12 beispielhaft in Form eines Graphendiagrammes erkennen. Das beispielhafte Verkehrswegenetz besteht aus den Kanten k1, k2, k3, k4, k5, k6, k7, k8, k9 und k10. Die Vermaschungs- bzw. Kreuzungspunkte von Kanten sind als Knoten p1, p2, p3, p4, p5, p6, p7 und p8 bezeichnet. Der festgelegte Startpunkt 13 liegt an der Kante k1 und ist als Fahrzeugposition skizziert. Der mit einer Fahne gekennzeichnete Zielpunkt 14 liegt an der Kante k7. Die Kanten selbst entsprechen Verkehrswege- bzw. Straßenabschnitten.

Von einem Benutzer wurde eine Route über die Kanten k8, k9 und k10 als bevorzugte Route festgelegt, die nachfolgend als eingeprägter Routenabschnitt 15 genannt wird und schraffiert dargestellt ist. Ein solcher eingeprägter Routenabschnitt 15 kann zum Beispiel entlang touristischer Straßen verlaufen oder eine sonstige bevorzugte Route sein.

Die Figur 3 lässt das Graphendiagramm aus der Figur 2 mit einer optimierten Route entlang der Kanten k1, k2, k3 und k7 vom Startpunkt 13 bis zum Zielpunkt 14 erkennen, wobei die Route mit einem herkömmlichen Bestwege-Routenoptimierungs-algorithmus optimiert worden ist. Da die herkömmlichen Bestwege-Routenopti-mierungsalgorithmen nicht ausgelegt sind, um eingeprägte Routenabschnitte 15 zu berücksichtigen, verläuft die optimierte Route nicht über den eingeprägten Routenabschnitt 15.

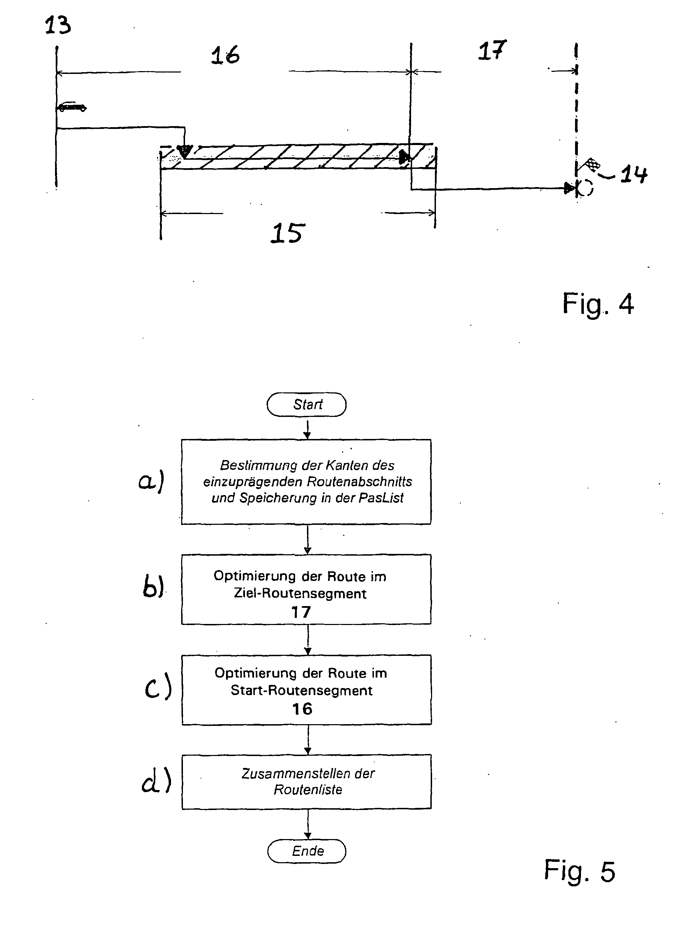

Für das erfindungsgemäße Verfahren zur automatischen Berechnung von optimalen Routen ist, wie in der Figur 4 skizziert, ein Aufteilen der Routen in zwei Routensegmente 16 und 17 vorgesehen, wobei ein erstes Startroutensegment 16 vom Startpunkt 13 bis etwa zu dem Ende des eingeprägten Routenabschnitts 15 verläuft. Das zweite sogenannte Zielroutensegment 17 verläuft vom Ende des Startroutensegments 16 bzw. etwa vom Ende des eingeprägten Routenabschnitts 15 bis zu dem Zielpunkt 14.

Gemäß der vorliegenden Erfindung wird im Gegensatz zu herkömmlichen Bestwege-Routenoptimierungsalgorithmen die Optimierung der Route für das Startroutensegment 16 und das Zielroutensegment 17 getrennt voneinander durchgeführt.

Die Figur 5 lässt ein Flussdiagramm des erfindungsgemäßen Verfahrens zur automatischen Berechnung von optimalen Routen erkennen, aus dem die getrennte Routenberechnung für die beiden Routensegmente 16 und 17 deutlich wird.

Nach dem Start einer automatischen Berechnung einer optimalen Route in einem Verkehrswegenetz werden in einem ersten Schritt a) zunächst die Kanten des einzuprägenden Routenabschnitts 15, zum Beispiel über den Index 11, bestimmt und in einer Passierliste PassList abgespeichert.

Anschließend erfolgt in einem zweiten Schritt b) die Optimierung der Route in dem Zielroutensegment 17. Erst nachdem für das Zielroutensegment 17 eine optimale Route ermittelt worden ist, erfolgt in einem dritten Schritt c) die Optimierung der Route in dem Startroutensegment 16.

In einem vierten Schritt d) wird nach Abschluss der Routenoptimierung im Startroutensegment 16 eine endgültige Routenliste aus den optimalen Routen aus dem zweiten und dritten Schritt des Verfahrens zusammengestellt und das automatische Berechnungsverfahren einer optimalen Route beendet.

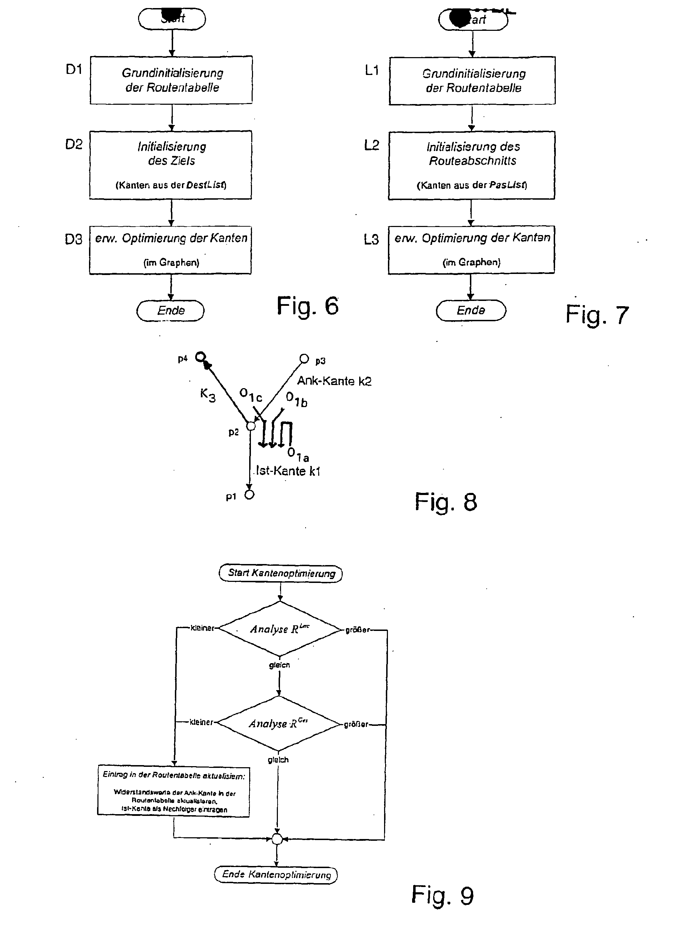

Die Figur 6 lässt ein Flussdiagramm zur Optimierung der Route im Ziel-Routensegment 17 erkennen. Nach dem Start der Prozedur wird zunächst eine Routentabelle grundinitialisiert. Hierbei werden die Widerstände der Kanten auf einen Wert von "unendlich" gesetzt. Die jeweiligen Nachfolger für die Widerstände werden auf "undefiniert" (-) gesetzt (Schritt D1).

In einem zweiten Schritt D2 werden die Kanten aus einer Zielliste (Dest-List) initialisiert. Dies sind die zu dem Zielpunkt 14 zugehörigen Kanten. Der Widerstand dieser Kanten wird auf Null unter jeweils zugehörige Nachfolger als nicht vorhanden (NIL) gesetzt.

In einem dritten Schritt D3 erfolgt eine über die bekannten Bestwege-Routenoptimierungsalgorithmen erweiterte Optimierung der Kanten basierend auf der Graphentheorie, die später im Detail erläutert wird. Nach der erfolgten Optimierung der Kanten für die Route im Ziel-Routensegment 17 ist das Teilverfahren abgeschlossen.

Die Figur 7 lässt das entsprechende Verfahren für den dritten Schritt c) zur Optimierung der Route im Start-Routensegment 16 erkennen.

Im ersten Schritt L1 erfolgt wiederum eine Grundinitialisierung der Routentabelle, wobei alle dem Start-Routensegment 16 zugehörigen Kanten in die Routentabelle eingetragen und die entsprechenden Widerstände auf "unendlich" gesetzt werden. Die jeweiligen Nachfolger der Widerstände werden auf "undefiniert" (-) gesetzt. In einem zweiten Schritt L2 erfolgt eine Initialisierung des Startroutensegmentes, wobei die Kanten aus der Passierliste (PassList) als solche in der Routentabelle gekennzeichnet werden. Da das Optimierungsverfahren bekannterweise rückwärts iterierend ausgeführt wird, werden die Kanten, von denen die Optimierung startet, initialisiert. Das sind für das Startroutensegment 16 die Kanten des eingeprägten Routenabschnitts 15 mit dem kleinsten Widerstand zum Zielpunkt 14 des Zielroutensegments 17.

Für diese Kanten wird der zuvor bei der Optimierung der Route im Ziel-routensegment 17 ermittelte Widerstand in der Routentabelle eingetragen und der Nachfolger entsprechend gekennzeichnet. Weiterhin wird der Widerstand für sämtliche Kanten des eingeprägten Routenabschnitts 15 zu Null gesetzt.

Anschließend erfolgt im dritten Schritt L3 eine erweiterte Optimierung der Kanten. Das Verfahren entspricht im wesentlichen dem Schritt D3 bei der Optimierung der Route im Zielroutensegment.

Das erweiterte Optimierungsverfahren der Kanten im rückwärts gerichteten iterativen Verfahren wird mit bezug auf die Figur 8 im folgenden näher erläutert, welche Optimierungsbeziehungen von Kanten k am Knoten p zeigt. Von einer Ist-Kante k1, die eine fiktive Fahrzeugposition darstellt, werden sämtliche mit der Ist-Kante k1 vermaschten sogenannten Ahkommer-Kanten (Ank-Kante) überprüft. Im dargestellten Beispiel ist die Ist-Kante k1 zum Zielpunkt 14 gerichtet. An einem Knoten p2 stoßen die Ankommer-Kanten k2 und k3 an die Ist-Kante k1 an.

Zur Optimierung werden die Optimierungsbeziehungen O1A, O1B und O1C geprüft. Die Optimierungsbeziehung 01 A repräsentiert das Wenden an dem Knoten p2 der Ist-Kante k1 und berücksichtigt den positiven und negativen Widerstand der Ist-Kante k1.

Die Optimierungsbeziehung 01 B berücksichtigt die Widerstände der Ankommer-Kante k2 in positiver Richtung und den positiven Widerstand der Ist-Kante k1 in Richtung zum Zielpunkt 14.

Die Optimierungsbeziehung O1C berücksichtigt den negativen Widerstand der Ankommer-Kante k3 (entgegen der Pfeilrichtung) sowie den positiven Widerstand der Ist-Kante k1.

Bei dem rückwärts gerichteten iterierenden Optimierungsverfahren werden ausgehend von den betrachteten Zielkanten des jeweiligen Routensegments 16 oder 17 die Startkanten des im vorherigen Optimierungsschritt optimierten Teilroutenverlaufs jeweils als Ist-Kanten verwendet.

Die Figur 9 lässt ein Flussdiagramm der erfindungsgemäßen Optimierungsregel erkennen, nach der eine Kante innerhalb einer Route als optimal festgelegt wird. Das Optimierungsverfahren wird in dem Schritt D3 und L3 zur Optimierung der Route im Ziel-Routensegment 17 und im Start-Routensegment 16 gleichermaßen verwendet.

Für jede Ankommer-Kante wird zunächst überprüft, ob der in der Routentabelle eingetragene Widerstand $R^{Seg}_{RT,Ist}$ der Ist-Kante bezogen auf das entsprechende Routensegment plus dem Widerstand $R_{Kante,Ank}$ der Ankommer-Kante kleiner als der in der Routentabelle eingetragene alte Widerstand $R_{RTalt,Ank}$ der Ankommer-Kante zum Zielpunkt im jeweiligen Routensegment Seg ist, dass heißt

$$R^{seg}_{RT,\,Ist} + R_{Kante,\,Ank} < R^{seg}_{RTalt,Ank.}$$

Wenn diese hinreichende Bedingung erfüllt ist, wird der Eintrag für die entsprechende Ankommer-Kante in der Routentabelle aktualisiert, indem die Widerstandswerte der Ankommer-Kante in der Routentabelle und die Ist-Kante als Nachfolger eingetragen werden.

Für den Fall, dass der in der Routentabelle eingetragene alte Widerstand der Ankommer-Kante bezogen auf das Routensegment größer als die Summe des in der Routentabelle eingetragenen Widerstandes der Ist-Kante für das Routensegment plus des Widerstandes der Ankommer-Kante ist, ist die Kantenoptimierung für die geprüfte Ankommer-Kante beendet.

Im Falle einer Gleichheit erfolgt eine weitere Analyse der Gesamtwiderstände, die auf das gesamte Verkehrswegenetz ungeachtet der Aufteilung in das Start- und das Zielroutensegment 16, 17 bezogen ist. Hierbei wird überprüft, ob der in der Routentabelle eingetragene Gesamtwiderstand der Ist-Kante plus des Widerstandes der Ankommer-Kante kleiner als der in der Routentabelle bislang eingetragene Gesamtwiderstand der Ankommer-Kante bis zum Zielpunkt 14 ist. Sofern diese Bedingung erfüllt ist, wird der Eintrag in der Routentabelle, wie oben beschrieben, aktualisiert, indem die Widerstandswerte der Ankommer-Kante sowie die Ist-Kante als Nachfolger in der Routentabelle eingetragen werden.

Die Bedingung zur Analyse des Gesamtwiderstandes ist mathematisch wie folgt darstellbar:

$$(R^{Seg}_{RT,Ist} + R_{Kante,Ank} = R^{Seg}_{RTalt,Ank}) \cap (R^{Ges}_{RT,Ist} + R_{Kante,Ank} < R^{Ges}_{RTalt,Ank})$$

wobei

$R^{Seg}_{RT,Ist}$: Widerstand der Ist-Kante zum Ziel in dem jeweiligen Routensegment Seg aus der Routentabelle,

$R_{Kante,Ank}$: Kantenwiderstand der Ankommer-Kante,

$R^{Seg}_{RTalt,Ank}$: Widerstand der Ankommer-Kante zum Zielpunkt im jeweiligen Routensegement Seg aus der Routentabelle,

$R^{Ges}_{RT,Ist}$: Widerstand der Ist-Kante zum absoluten Zielpunkt 14 aus der Routentabelle,

$R^{Ges}_{RTalt,Ank}$: Widerstand der Ankommer-Kante zum absoluten Zielpunkt 14 aus der Routentabelle

ist.

Somit erfolgt eine Optimierung der jeweils geprüften Ankommer-Kante, sofern eine der beiden oben genannten Bedingungen zur Analyse des Widerstandes bezogen auf die Segmente $R^{Seg}$ oder der Analyse des Gesamtwiderstandes $R^{Ges}$ erfüllt ist. Dann werden die neuen Eigenschaften der Ankommer-Kante in die Routentabelle und als Nachfolger die jeweilige Ist-Kante eingetragen.

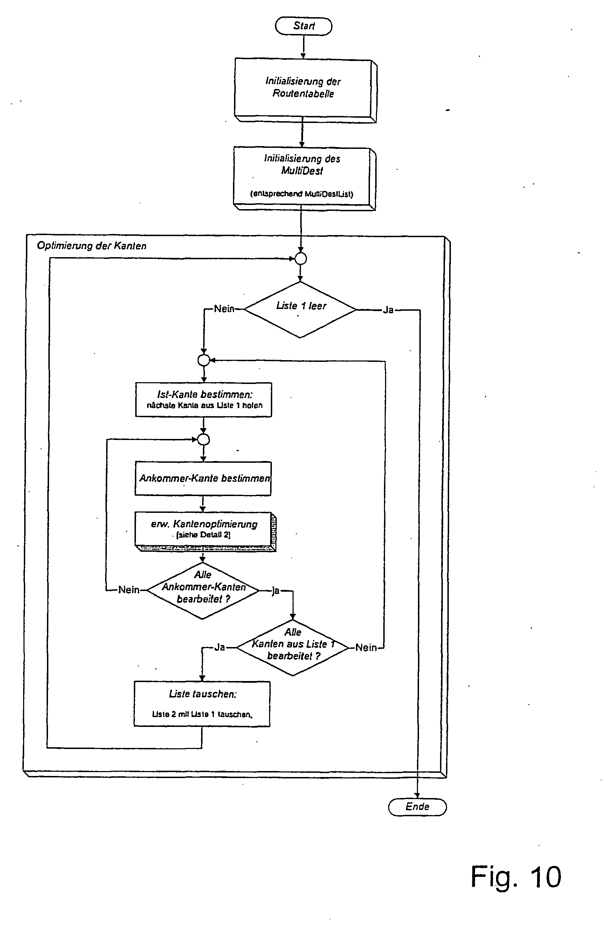

Das Flussdiagramm zur Kantenoptimierung aus den Figuren 6 und 7 ist in der Figur 10 nochmals im Detail dargestellt. Nach der Grundinitialisierung und Initialisierung des Ziels- bzw. Routenabschnitts 16,17 erfolgt die Prozedur D3 bzw. L3 zur Optimierung der Kanten. Hierfür ist zunächst eine Abschlussliste (Liste 1) vorgesehen, in die bereits optimierte Kanten eingetragen werden. Bei der Initialisierung des Ziels wird die Zielkante in dieser Abschlussliste eingetragen. Eine zweite sogenannte Optimierungsliste (Liste 2) wird zur Speicherung der im nächsten Optimierungsschritt zu prüfenden Kanten benötigt. Sie ist zu Beginn des Optimierungsverfahrens leer. Die in der Abschlussliste aufgeführten Kanten werden als fiktive Ist-Position eines Fahrzeugs betrachtet und alle mit dieser Ist-Kante vermaschten Ankommer-Kanten einer Optimierung zur Prüfung unterzogen. Bei der Optimierung der Kanten wird somit zunächst überprüft, ob die Abschlussliste (Liste 1) leer ist. Wenn die Abschlussliste leer ist, wird die Optimierung der Kanten beendet. Andernfalls wird die Ist-Kante bestimmt, indem die nächste noch nicht berücksichtigte Kante aus der Abschlussliste (Liste 1) geholt wird. Für diese Ist-Kante wird eine Ankommer-Kante bestimmt, und es erfolgt die bereits in bezug auf die Figur 9 detailiert beschriebene Kantenoptimierung. Anschließend wird geprüft, ob alle Ankommer-Kanten der Ist-Kanten bearbeitet sind. Falls noch nicht alle Ankommer-Kanten optimiert wurden, wird die nächste Ankommer-Kante für die aktuelle Ist-Kante bestimmt, und es erfolgt auch hierfür eine Kantenoptimierung. Nachdem alle Ankommer-Kanten bearbeitet wurden, wird überprüft, ob alle Kanten aus der Abschlussliste (Liste 1) bearbeitet wurden. Falls noch nicht alle Kanten aus der Abschlussliste bearbeitet wurden, wird die nächste Ist-Kante bestimmt und das Verfahren auf diese Weise iterativ fortgeführt.

Die jeweils optimierte Ankommer-Kante wird in die Optimierungsliste (Liste 2) aufgenommen.

Wenn alle Kanten aus der Abschlussliste (Liste 1) bearbeitet worden sind, werden die Abschlussliste (Liste 1) und die Optimierungsliste (Liste 2) vertauscht, so dass der Ausgangspunkt für die nächsten Optimierungen, die im letzten Schritt optimierten Kanten sind.

Da in die Optimierungsliste (Liste 2) bei einem Durchlauf keine Ankommer-Kanten mehr eingetragen werden, wenn eine optimale Route gefunden wird, terminiert das Verfahren aufgrund der Listenvertauschung, wenn in der Abschlussliste (vorher Optimierungsliste) keine Einträge mehr sind, dass heißt es keine im vorherigen Durchlauf optimierte Kanten mehr gab.

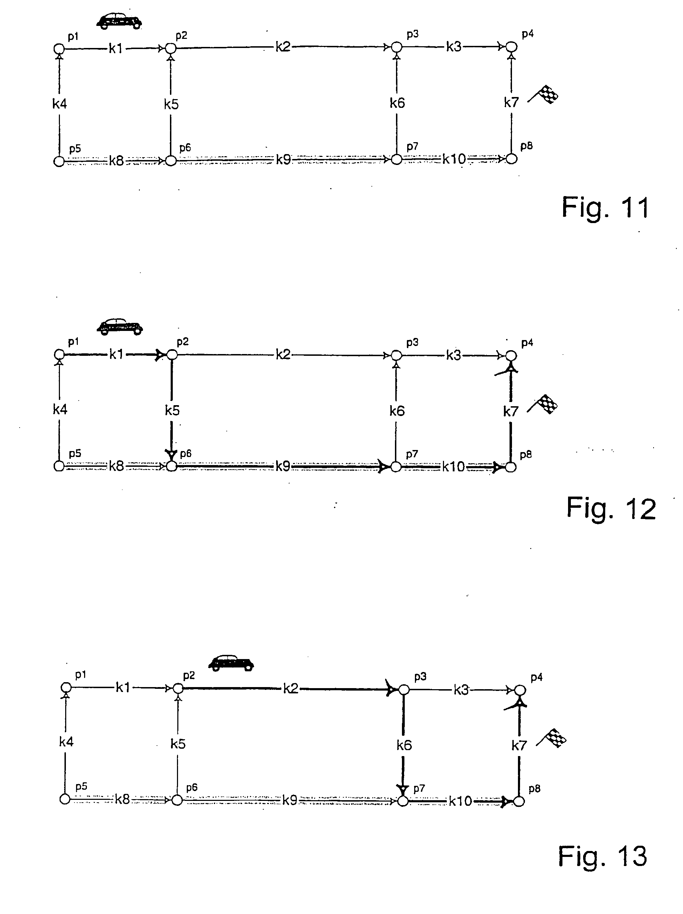

Dieses theoretisch beschriebene erfindungsgemäße Verfahren wird nun anhand der Figuren 11 bis 13 beispielhaft erläutert.

Die Figur 11 zeigt ein Verkehrswegenetz mit den Kanten k1 bis k10, den Knoten p1 bis p8 sowie mit einem festgelegten eingeprägten Routenabschnitt 15, der die Kanten k8, k9 und k10 umfasst und schraffiert dargestellt ist.

Es soll eine Route von einem Startpunkt 13 zu einem Zielpunkt 14 ermittelt werden, die optimal ist und im wesentlichen den eingeprägten Routenabschnitt berücksichtigt.

Die Figur 12 zeigt das Verkehrswegenetz aus der Figur 11 ebenfalls in einer Graphendarstellung mit einer nach Ausführung des erfindungsgemäßen Verfahrens optimierten Route von dem Startpunkt 13 zu dem Zielpunkt 14. Die optimierte Route verläuft über die Kanten k1, k5, k9, k10 und k7.

Diese optimierte Route wurde wie folgt bestimmt, wobei für das Verkehrswegenetz angenommen wird, dass sämtliche Kanten den Widerstandswert 10 mit Ausnahme der Kanten k2 und k9 haben. Die Kanten k2 und k9 besitzen einen Widerstandswert von 20.

Für die Beschreibung des eingeprägten Routenabschnitts wird eine Passierliste (PassList) verwendet. In dieser Liste werden sämtliche Kanten des eingeprägten Routenabschnitts der Routensuche übergeben. Die Passierliste (PassList) erhält für das Beispiel die folgenden Einträge:

| Kante |
|-------|
| +/- k8 |
| +/- k9 |
| +/-k10 |

Weiterhin wird für jedes Routensegment jeweils eine Routentabelle erzeugt, die die Eigenschaften sämtlicher Kanten des Verkehrswegenetzes innerhalb des betrachteten Routenabschnitts 16,17 der zu optimierenden Route zum Zielpunkt 14 enthält. Für jede Kante ist der Gesamtwiderstand und der Segmentwiderstand sowohl in Pfeilrichtung als auch entgegen der Pfeilrichtung eingetragen. Zusätzlich ist für jede Pfeilrichtung die entsprechende Nachfolgerkante registriert. Ferner ist für jede Kante eine Statuskennung vorgesehen, die kennzeichnet, ob die Kante zu einem eingeprägten Routenabschnitt gehört oder nicht.

Zunächst erfolgt in einem ersten Schritt D1 für das Zielroutensegment 17 eine Initialisierung der Routentabelle, wobei die Segmentwiderstände $R^{Seg}$ und Gesamtwiderstände $R^{Ges}$ auf "unendlich" gesetzt werden. Die Nachfolger-Kanten werden auf "undefiniert" gesetzt. Da die Kanten k8, k9 und k10 zum eingeprägten Routenabschnitt gehören, wird die Status-Kennung dieser Kanten auf Pass gesetzt. Es ergibt sich folgende Tabelle für das Zielroutensegment 17, die jedoch auch im Schritt L1 für die Initialisierung der Routentabelle für das Startroutensegment 16 identisch ist:

| Kante | Status | $+R^{Gesamt}$ | $+R^{Seg}$ | +Nachfolger | $-R^{Gesamt}$ | $-R^{Seg}$ | -Nachfolger |
|-------|--------|------|------|-------------|------|------|-------------|
| k1 | - | ∞ | ∞ | - | ∞ | ∞ | - |
| k2 | - | ∞ | ∞ | - | ∞ | ∞ | - |
| k3 | - | ∞ | ∞ | - | ∞ | ∞ | - |
| k4 | - | ∞ | ∞ | - | ∞ | ∞ | - |
| k5 | - | ∞ | ∞ | - | ∞ | ∞ | - |
| k6 | - | ∞ | ∞ | - | ∞ | ∞ | - |
| k7 | - | ∞ | ∞ | - | ∞ | ∞ | - |
| k8 | Pass | ∞ | ∞ | - | ∞ | ∞ | - |
| k9 | Pass | ∞ | ∞ | - | ∞ | ∞ | - |
| k10 | Pass | ∞ | ∞ | - | ∞ | ∞ | - |

In einem zweiten Schritt D2 erfolgt die Initialisierung der Optimierung für das Zielroutensegment 17. Hierbei werden die Kanten, von denen die Optimierung startet, initialisiert. Dies sind sämtliche Kanten des Zielpunkts 14. Für diese werden die Widerstände in der Routentabelle zu Null und als Nachfolger die Kennzeichnung "Ziel" eingetragen, so dass sich folgende Tabelle ergibt:

| Kante | Status | $+R^{Gesamt}$ | $+R^{Seg}$ | +Nachfolger | $-R^{Gesamt}$ | $-R^{Seg}$ | -Nachfolger |
|-------|--------|------|------|-------------|------|------|-------------|
| k1 | - | ∞ | ∞ | - | ∞ | ∞ | - |
| k2 | - | ∞ | ∞ | - | ∞ | ∞ | - |
| k3 | - | ∞ | ∞ | - | ∞ | ∞ | - |
| k4 | - | ∞ | ∞ | - | ∞ | ∞ | - |
| k5 | - | ∞ | ∞ | - | ∞ | ∞ | - |
| k6 | - | ∞ | ∞ | - | ∞ | ∞ | - |
| k7 | - | 0 | 0 | Ziel | 0 | 0 | Ziel |

(fortgesetzt)

| Kante | Status | +R$^{Gesamt}$ | +R$^{Seg}$ | +Nachfolger | -R$^{Gesamt}$ | -R$^{Seg}$ | -Nachfolger |
|---|---|---|---|---|---|---|---|
| k8 | Pass | ∞ | ∞ | - | ∞ | ∞ | - |
| k9 | Pass | ∞ | ∞ | - | ∞ | ∞ | - |
| k10 | Pass | ∞ | ∞ | - | ∞ | ∞ | - |

Diese Kanten werden in die Abschlussliste (Liste 1) der zu optimierenden Kanten aufgenommen, die hierdurch folgendes Aussehen erhält.

| +k7 | -k7 | | | | | | |
|---|---|---|---|---|---|---|---|

In einem dritten Schritt D3 erfolgt die Optimierung der Kanten des Graphen. Die Optimierung des Zielsegments 17 erfolgt für sämtliche Optimierungsbeziehungen auf Basis der oben insbesondere in bezug auf Figur 9 im Detail beschriebenen Optimierungsregel. Nach der vollständigen iterativen Optimierung des Graphen ergibt sich die folgende Routentabelle:

| Kante | Status | +R$^{Gesamt}$ | +R$^{Seg}$ | +Nachfolger | -R$^{Gasamt}$ | -R$^{Seg}$ | -Nachfolger |
|---|---|---|---|---|---|---|---|
| k1 | - | 40 | 40 | +k2 | 50 | 50 | +k1 |
| k2 | - | 30 | 30 | +k3 | 50 | 50 | +k2 |
| k3 | - | 10 | 10 | -k7 | 20 | 20 | +k3 |
| k4 | - | 60 | 60 | +k1 | 60 | 60 | -k1 |
| k5 | - | 40 | 40 | +k2 | 40 | 40 | +k9 |
| k6 | - | 20 | 20 | +k3 | 20 | 20 | +k10 |
| k7 | - | 0 | 0 | Ziel | 0 | 0 | Ziel |
| k8 | Pass | 40 | 40 | +k9 | 50 | 50 | +k8 |
| k9 | Pass | 30 | 30 | +k10 | 50 | 50 | +k9 |
| k10 | Pass | 10 | 10 | +k7 | 20 | 20 | +k10 |

Aus dieser Routentabelle lassen sich die Kanten des eingeprägten Routenabschnitts mit der Statuskennung "Pass" mit dem kleinsten Widerstand zum Ziel ermitteln. Für dieses Beispiel ist dies nur die Kante +k10 mit dem Widerstand 10, die die Ausgangsbasis für die Berechnung des Startroutensegments 16 darstellt.

Die Optimierung des Startroutensegments wird wie folgt durchgeführt:

In einem ersten Schritt L1 erfolgt die Initialisierung der Routentabelle, wie bereits in bezug auf den Schritt D1 beschrieben.

In einem zweiten Schritt L2 erfolgt die Initialisierung der Optimierung, wobei die Kanten initialisiert werden müssen, von denen die Optimierung startet. Für das Startroutensegment 16 sind dies die Kanten des eingeprägten Routenabschnitts mit der Statuskennung "Pass" mit dem kleinsten Widerstand zum Ziel des Zielroutensegments 17. Für diese Kanten wird der zuvor bei der Optimierung des Zielroutenabschnitts 17 ermittelte Widerstand in die Routentabelle eingetragen und der Nachfolger entsprechend gekennzeichnet. Ferner wird der Segmentwiderstand R$^{Seg}$ bezogen auf das Start-routensegment für sämtliche Kanten des eingeprägten Routenabschnitts zu Null gesetzt, so dass die Routentabelle folgendes Aussehen erhält:

| Kante | Status | +R$^{Gesamt}$ | +R$^{Seg}$ | +Nachfolger | -R$^{Gesamt}$ | -R$^{Seg}$ | -Nachfolger |
|---|---|---|---|---|---|---|---|
| k1 | - | ∞ | ∞ | - | ∞ | ∞ | - |
| k2 | - | ∞ | ∞ | - | ∞ | ∞ | - |
| k3 | - | ∞ | ∞ | - | ∞ | ∞ | - |
| k4 | - | ∞ | ∞- | - | ∞ | ∞ | - |

(fortgesetzt)

| Kante | Status | +R$^{Gesamt}$ | +R$^{Seg}$ | +Nachfolger | -R$^{Gesamt}$ | -R$^{Seg}$ | -Nachfolger |
|-------|--------|------|------|-------------|------|------|-------------|
| k5 | - | ∞ | ∞ | - | ∞ | ∞ | - |
| k6 | - | ∞ | ∞ | - | ∞ | ∞ | - |
| k7 | - | ∞ | ∞ | - | ∞ | ∞ | - |
| k8 | Pass | ∞ | 0 | - | ∞ | 0 | - |
| k9 | Pass | ∞ | 0 | - | ∞ | 0 | - |
| k10 | Pass | 10 | 0 | - | ∞ | 0 | - |

Die oben ermittelten Kanten des eingeprägten Routenabschnitts mit dem kleinsten Widerstand zum Ziel des Zielroutensegments 17 werden in die Abschlussliste (Liste 1) der bereits optimierten Kanten aufgenommen. Die Abschlussliste sieht dann wie folgt aus:

| +k10 | | | | | | |
|------|--|--|--|--|--|--|

In dem dritten Schritt L3 erfolgt die erweiterte Optimierung der Kanten des Graphen. Hierbei erfolgen die Optimierungen des Startroutensegments 16 für sämtliche Optimierungsbeziehungen auf Basis der in bezug auf die Figur 9 detailliert beschriebenen Optimierungsregeln. Nach der vollständigen Optimierung des Graphens ergibt sich die folgende Routentabelle:

| Kante | Status | +R$^{Gesamt}$ | +R$^{Seg}$ | +Nachfolger | -R$^{Gesamt}$ | -R$^{Seg}$ | -Nachfolger |
|-------|--------|------|------|-------------|------|------|-------------|
| k1 | - | 50 | 20 | -k5 | 60 | 20 | -k4 |
| k2 | - | 40 | 30 | -k6 | 50 | 20 | -k5 |
| k3 | - | 40 | 20 | -k7 | 30 | 20 | -k6 |
| k4 | - | 60 | 20 | +k4 | 50 | 10 | +k8 |
| k5 | - | 50 | 20 | -k5 | 40 | 10 | +k9 |
| k6 | - | 30 | 20 | -k6 | 20 | 10 | +k10 |
| k7 | - | 40 | 20 | -k7 | 30 | 10 | -k10 |
| k8 | Pass | 40 | 0 | +k9 | 50 | 0 | +k8 |
| k9 | Pass | 30 | 0 | +k10 | 50 | 0 | +k9 |
| k10 | Pass | 10 | 0 | --- | 20 | 0 | +k10 |

In dem nächsten Schritt erfolgt das Zusammenstellen der Routenliste, die aus den beiden Routentabellen für den Startroutenabschnitt 16 und den Zielroutenabschnitt 17 erzeugt wird.

Hierbei werden, ausgehend von der Kante der aktuellen Fahrzeugposition - hier Startposition 13-, die Kanten entsprechen der in der Routentabelle eingetragenen Nachfolgerverkettung des Startsegments 16 in die Routenliste geschrieben, bis kein Nachfolger mehr vorhanden ist. Anschließend wird die Nachfolgerverkettung des Zielroutensegments in die Routenliste geschrieben, bis die Zielkante k7 des Zielpunkts 14 erreicht wird. Als Ergebnis steht die optimierte Route tabellarisch in der Routenliste bereit.

Für das Beispiel hat die Routenliste folgende Einträge:

| Nr. | Kante | +Widerstand zum Ziel | Nachfolger zum Ziel |
|-----|-------|----------------------|---------------------|
| 1 | +k1 | 50 | -k5 |
| 2 | -k5 | 40 | +k9 |
| 3 | +k9 | 30 | +k10 |

(fortgesetzt)

| Nr. | Kante | +Widerstand zum Ziel | Nachfolger zum Ziel |
|-----|-------|----------------------|---------------------|
| 4 | +k10 | 20 | +k7 |
| 5 | +k7 | 10 | |
| 6 | | 0 | |

Diese Routenliste stellt sich im beispielhaften Verkehrswegenetz so dar, wie in dem Graphen aus der Figur 12 skizziert ist.

Die Figur 13 zeigt eine optimierte Route, nachdem das Fahrzeug von der in der Figur 12 skizzierten optimierten Route abgewichen ist. Dann wird eine neue optimierte Route nach dem oben beschriebenen Verfahren gefunden, wobei das Fahrzeug über die Kante k6 auf die Kante k10 des eingeprägten Routenabschnitts geführt wird.

Da das Verfahren rückwärts iterativ ausgehend von einem jeweiligen Startpunkt, dass heißt einer aktuellen Fahrzeugposition ausgeführt wird und nicht statisch ist, lässt sich jederzeit eine optimale Route von der aktuellen Ist-Position zum Ziel unter Berücksichtigung der Benutzung des eingeprägten Routenabschnitts bestimmen, ohne dass ein Wenden des Fahrzeugs und Rückführen auf die früher bestimmte optimale Route erzwungen wird.

Nachfolgend werden die unterschiedlichen Auswirkungen auf den Routenverlauf durch Einprägen von Zwischenzielen und Weggebieten (ViaAreas) sowie durch das erfindungsgemäße Einprägen von Routenabschnitten dargestellt.

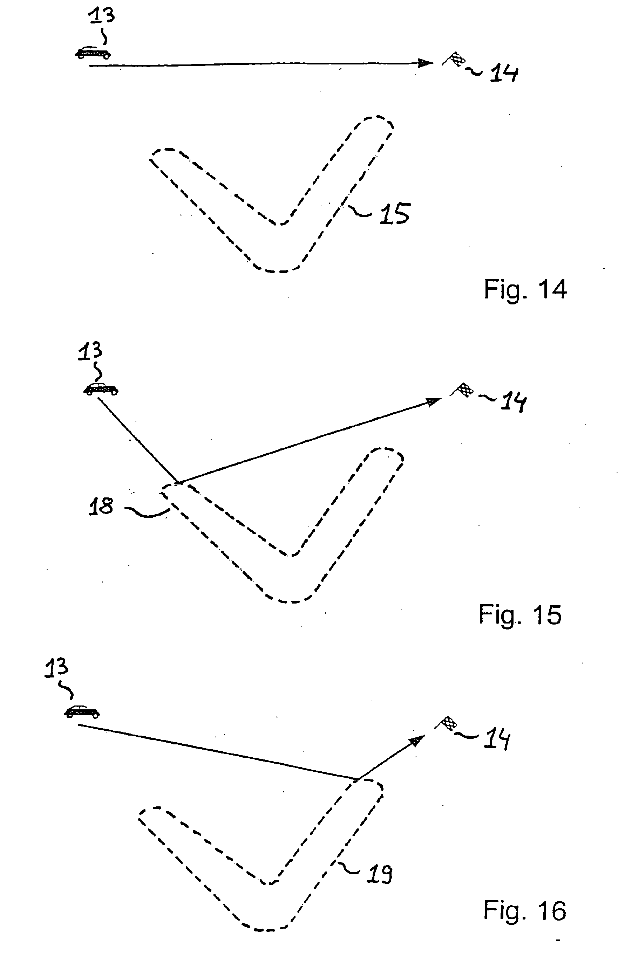

Die Figur 14 zeigt eine normale Route zwischen einem Startpunkt 13 und einem Zielpunkt 14. Diese Route verläuft direkt vom Startpunkt 13 zum Zielpunkt 14 und ist daher optimal kurz, berücksichtigt jedoch nicht den eingeprägten Routenabschnitt 15.

Die Figur 15 lässt eine Route unter Nutzung eines Zwischenziels 18 erkennen, die vorrangig zwischen dem Startpunkt 13 und dem Rand des Zwischenziels 18 unabhängig vom nachfolgenden Routenteil zum Ziel optimal ist. Es wird versucht, so schnell bzw. optimal wie möglich das Zwischenziel zu erreichen.

Die Figur 16 lässt eine Route unter Nutzung eines Weggebiets (ViaArea) 19 erkennen, bei der keiner der einzelnen Routenabschnitte für sich optimal ist. Vielmehr wird die gesamte Route optimiert. Das eingeprägte Weggebiet (ViaArea) 19 ist gestrichelt gekennzeichnet. Bei dem Optimierungsverfahren unter Berücksichtigung eingeprägter Weggebiete 19 ist es unerheblich, wo und wieviel das Weggebiet 19 in der Route Berücksichtigung findet.

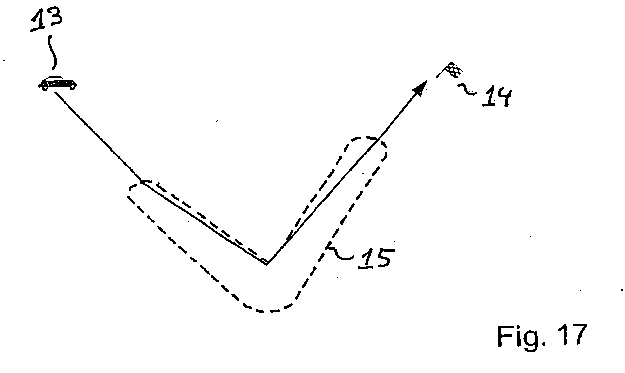

Die Figur 17 lässt hingegen eine nach dem erfindungsgemäßen Verfahren berechneten Route unter Nutzung eines gestrichelt gezeichneten eingeprägten Routenabschnitts 15 erkennen. Hierbei sind vorrangig zwei Teile der Route optimal, nämlich der Routenteil zwischen dem Startpunkt 13 und dem eingeprägten Routenabschnitt 15, sowie dem Routenteil zwischen dem eingeprägten Routenabschnitt und dem Zielpunkt 14. Der Routenteil innerhalb des eingeprägten Routenabschnitts 15 ist zwischen dem Ein- und Austrittspunkt für sich auch wieder optimal.

Auf diese Weise ist die gesamte Route optimiert, wobei sichergestellt ist, dass sie möglichst weitgehend den eingeprägten Routenabschnitt 15 durchläuft.

**Patentansprüche**

1. Verfahren zur automatischen Berechnung einer optimalen Route in einem Verkehrswegenetz unter Berücksichtigung eines festgelegten eingeprägten Routenabschnitts, wobei das Verkehrswegenetz durch mit einem Widerstand (R) bewertete Kanten (k) für Verkehrswegeabschnitte beschrieben ist und die zu berechnende Route von einer Startkante zu einer Zielkante unter Berücksichtigung eines vorgegebenen Routenabschnitts verläuft,
**dadurch gekennzeichnet,**
**dass** zunächst der Routenteil von den Verkehrswegeabschnitten des eingeprägten Routenabschnitts zum Ziel in Bezug auf den günstigen Widerstand (R) zum Ziel optimiert wird und
im Anschluss der Routenteil vom Start zu den Verkehrswegeabschnitten des eingeprägten Routenabschnitts in Bezug auf den günstigen Widerstand sowohl zum Ziel als auch zum eingeprägten Routenabschnitt optimiert wird.

2. Verfahren nach Anspruch 1, **gekennzeichnet durch**:

a) Aufteilen der Route in zwei Routensegmente (16,17), wobei ein erstes Startroutensegment (16) von der Startkante bis zu etwa dem Ende des eingeprägten Routenabschnitts (15) und ein zweites Zielroutensegment (17) von etwa dem Ende des eingeprägten Routenabschnitts (15) bis zu der Zielkante verläuft,
b) Optimierung der Routen separat jeweils für das Startroutensegment (16) und für das Zielroutensegment (17), wobei für eine Ankommer-Kante, die mit einer jeweils zu prüfenden Ist-Kante vermascht ist, eine Route als optimal festgelegt wird, entweder, wenn der Widerstand der bislang für die Ankommer-Kante als optimal festgelegten Route im jeweiligen Routensegment (16,17) schlechter als der Widerstand der von der Ankommer-Kante ausgehenden neuen Route im jeweiligen Routensegment (16,17) unter Benutzung der ist-Kante ist, oder, wenn der Widerstand der bislang für die Ankommer-Kante als optimal festgelegten Route im jeweiligen Routensegment (16,17) dem Widerstand der von der Ankommer-Kante ausgehenden neuen Route im jeweiligen Routensegment (16,17) unter Benutzung der Ist-Kante entspricht und wenn der Gesamtwiderstand der bislang für die Ankommer-Kante in bezug auf die gesamte Route als optimal,festgelegten Route schlechter als der Gesamtwiderstand der Ankommer-Kante ausgehenden neuen gesamten Route unter Benutzung der Ist-Kante ist,

c) Feststellen der optimalen Route aus den Ergebnissen der Optimierung für das Startroutensegment (16) und das Zielroutensegment (17).

3. Verfahren nach Anspruch 2, **gekennzeichnet durch** die Schrittfolge:

a) Optimierung der Route im Zielroutensegment (17);
b) Optimierung der Route im Startroutensegment (16);
c) Feststellen der optimalen Kante aus den Ergebnissen der Optimierung für das Startroutensegment (16) und das Zielroutensegment (17).

4. Verfahren nach Anspruch 2 oder 3, **gekennzeichnet durch** Initialisieren jeweils einer Routentabelle für das Startroutensegment (16) und das Zielroutensegment (17) mit allen möglichen Kanten (k) des Verkehrswegenetzes (12) für die Route in dem jeweiligen Routensegment (16,17), für jede Kante (k) mit jeweils einem Widerstand $^{®}$ pro Richtung einer Kante und pro Widerstand mit jeweils einer nachfolgenden Kantennummer, wobei zur Initialisierung die Widerstände$^{®}$ auf einen Extremwert und die nachfolgenden Kanten (k) als undefiniert festgelegt werden;

5. Verfahren nach Anspruch 4, **gekennzeichnet durch** Initialisierung der Ursprungs-Kanten, von denen die Optimierung gestartet wird, zur Optimierung der Route im Zielroutensegment (17), wobei in der Routentabelle der Widerstand (R) der Ursprungs-Kanten zu Null und die zugehörige Nachfolger-Kante auf nicht vorhanden gesetzt wird.

6. Verfahren nach Anspruch 4 oder 5, **gekennzeichnet durch** Initialisierung der Ursprungs-Kanten zur Optimierung der Route im Startroutensegment (16), wobei als Ursprungs-Kante die Startkanten des Zielroutensegmentes mit dem geringsten Widerstand (R) bis zur Zielkante vorgesehen sind und der Gesamtwiderstand der Ursprungs-Kanten auf den jeweils bei der Optimierung des Zielroutensegmentes für die Ursprungs-Kante ermittelten Wert, und die Widerstände (R) in bezug auf das Startroutensegment für die Kanten (k) des eingeprägten Routenabschnitts (15) auf Null gesetzt werden.

7. Verfahren nach einem der Ansprüche 4 bis 6, **dadurch gekennzeichnet, dass** die Initialisierung jeweils zu Beginn der Optimierung des Startroutensegmentes (16) und des Zielroutensegmentes (17) durchgeführt wird.

8. Verfahren nach einem der vorhergehenden Ansprüche, **gekennzeichnet durch** eine Statuskennung in der Routentabelle für die Kanten (k) des eingeprägten Routensegmentes (15).

9. Verfahren nach einem der vorhergehenden Ansprüche, **gekennzeichnet durch** Speichern der bereits optimierten Kanten (k) in einer Kantenliste.

10. Computerprogramm mit Programmcodemitteln zur Durchführung des Verfahrens nach einem der vorhergehenden Ansprüche, wenn das Programm auf einer Recheneinheit ausgeführt wird.

11. Navigationssystem mit einer Recheneinheit und mit einem Computerprogramm zur Durchführung des Verfahrens nach einem der Ansprüche 1 bis 9.

**Claims**

1. Method for automatically calculating an optimum route in a traffic route network by taking account of a stipulated impressed route section, wherein the traffic route network is described by edges (k), rated with a resistance (R), for traffic route sections, and the route to be calculated runs from a starting edge to a destination edge in due consideration of a prescribed route section,
**characterized**
**in that** first of all the route element from the traffic route sections in the impressed route section to the destination is optimized in terms of the beneficial resistance (R) for the destination, and
then the route element from the start to the traffic route sections in the impressed route section is optimized in terms of the beneficial resistance both for the destination and for the impressed route section.

2. Method according to Claim 1, **characterized by**:

   a) the route being split into two route segments (16, 17), wherein a first starting route segment (16) runs from the starting edge to approximately the end of the impressed route section (15), and a second destination route segment (17) runs from approximately the end of the impressed route section (15) to the destination edge,
   b) the routes being optimized separately for the starting route segment (16) and for the destination route segment (17), respectively, wherein, for an arrival edge intermeshed with a respective actual edge that is to be checked, a route is stipulated as optimum

   - either if the resistance of the route previously stipulated as optimum for the arrival edge in the respective route segment (16, 17) is worse than the resistance of the new route starting from the arrival edge in the respective route segment (16, 17), using the actual edge,
   - or if the resistance of the route previously stipulated as optimum for the arrival edge in the respective route segment (16, 17) corresponds to the resistance of the new route starting from the arrival edge in the respective route segment (16, 17), using the actual edge, and if the total resistance of the route previously stipulated as optimum for the arrival edge in relation to the total route is worse than the total resistance of the new total route starting from the arrival edge, using the actual edge,

   c) the optimum route being established from the results of the optimization for the starting route segment (16) and the destination route segment (17).

3. Method according to Claim 2, **characterized by** the step sequence:

   a) optimization of the route in the destination route segment (17);
   b) optimization of the route in the starting route segment (16);
   c) establishment of the optimum edge from the results of the optimization for the starting route segment (16) and the destination route segment (17).

4. Method according to Claim 2 or 3, **characterized by** a respective route table being initialized for the starting route segment (16) and the destination route segment (17) with all the possible edges (k) in the traffic route network (12) for the route in the respective route segment (16, 17), for each edge (k) with a respective resistance (R) per direction of an edge and per resistance with a respective subsequent edge number, wherein for the purpose of initialization the resistances (R) are set to an extreme value and the subsequent edges (k) are stipulated as undefined.

5. Method according to Claim 4, **characterized by** the original edges, for which the optimization is started, being initialized for the purpose of optimizing the route in the destination route segment (17), wherein in the route table the resistance (R) of the original edges is set to zero and the associated successor edge is set to not present.

6. Method according to Claim 4 or 5, **characterized by** the original edges being initialized for the purpose of optimizing the route in the starting route segment (16), wherein the starting edges of the destination route segment with the lowest resistance (R) up to the destination edge are provided as an original edge, and the total resistance of the original edges is set to the respective value ascertained when optimizing the destination route segment for the original edge, and the resistances (R) in relation to the starting route segment for the edges (k) of the impressed route section (15) are set to zero.

7. Method according to one of Claims 4 to 6, **characterized in that** the initialization is respectively performed at the start of the optimization of the starting route segment (16) and of the destination route segment (17).

8. Method according to one of the preceding claims, **characterized by** a status identifier in the route table for the edges (k) of the impressed route segment (15).

**9.** Method according to one of the preceding claims, **characterized by** the storage of the already optimized edges (k) in an edge list.

**10.** Computer program having program code means for performing the method according to one of the preceding claims when the program is executed on a computation unit.

**11.** Navigation system having a computation unit and having a computer program for performing the method according to one of Claims 1 to 9.

**Revendications**

**1.** Procédé de calcul automatique d'un trajet optimal dans un réseau de voies de circulation en tenant compte d'une portion de trajet retenue fixe, le réseau de voies de circulation étant décrit par des bords (k) évalués par une résistance (R) pour les portions de voies de circulation et le trajet à calculer d'un bord de départ à un bord de destination se déroulant en tenant compte d'une portion de trajet prédéfinie,
**caractérisé en ce**
**que** la partie du trajet depuis les portions des voies de circulation de la portion de trajet retenue vers la destination est d'abord optimisée du point de vue de la résistance (R) favorable vers la destination et
la partie du trajet depuis le départ vers les portions des voies de circulation de la portion de trajet retenue est ensuite optimisée du point de vue de la résistance favorable à la fois vers la destination et vers la portion de trajet retenue.

**2.** Procédé selon la revendication 1, **caractérisé par** :

a) le partage du trajet en deux segments de trajet (16, 17), un premier segment de trajet de départ (16) s'étendant depuis le bord de départ jusqu'à environ la fin de la portion de trajet retenue (15) et un deuxième segment de trajet de destination (17) depuis environ la fin de la portion de trajet retenue (15) jusqu'au bord de destination,
b) l'optimisation des trajets séparément à chaque fois pour le segment de trajet de départ (16) et pour le segment de trajet de destination (17), un trajet étant défini optimal pour un bord arrivant qui est maillé avec un bord réel à chaque fois à contrôler, soit lorsque la résistance du trajet défini optimal jusqu'à présent pour le bord arrivant dans le segment de trajet (16, 17) correspondant est plus mauvaise que la résistance du nouveau trajet en partance du bord arrivant dans le segment de trajet (16, 17) correspondant en utilisant le bord réel,
soit lorsque la résistance du trajet défini optimal jusqu'à présent pour le bord arrivant dans le segment de trajet (16, 17) correspondant correspond à la résistance du nouveau trajet en partance du bord arrivant dans le segment de trajet (16, 17) correspondant en utilisant le bord réel, et lorsque la résistance totale du trajet défini optimal jusqu'à présent pour le bord arrivant en référence au trajet total est plus mauvaise que la résistance totale du nouveau trajet total en partance du bord arrivant en utilisant le bord réel,
c) la définition du trajet optimal à partir des résultats de l'optimisation pour le segment de trajet de départ (16) et le segment de trajet de destination (17).

**3.** Procédé selon la revendication 2, **caractérisé par** la séquence d'étapes suivante :

a) optimisation du trajet dans le segment de trajet de destination (17) ;
b) optimisation du trajet dans le segment de trajet de départ (16) ;
c) définition du bord optimal à partir des résultats de l'optimisation pour le segment de trajet de départ (16) et le segment de trajet de destination (17).

**4.** Procédé selon la revendication 2 ou 3, **caractérisé par** l'initialisation respectivement d'un tableau des trajets pour le segment de trajet de départ (16) et le segment de trajet de destination (17) avec tous les bords (k) possibles du réseau de voies de circulation (12) pour le trajet dans le segment de trajet (16, 17) correspondant, pour chaque bord (k) avec à chaque fois une résistance (R) par direction d'un bord et par résistance avec à chaque fois un numéro de bord suivant, l'initialisation s'effectuant en fixant les résistances (R) à une valeur extrême et les bords (k) suivants comme étant indéfinis.

**5.** Procédé selon la revendication 4, **caractérisé par** l'initialisation des bords d'origine depuis lesquels l'optimisation a commencé en vue d'optimiser le trajet dans le segment de trajet de destination (17), la résistance (R) des bords d'origine étant mise à zéro dans le tableau des trajets et le bord suivant correspondant étant défini comme non présent.

**6.** Procédé selon la revendication 4 ou 5, **caractérisé par** l'initialisation des bords d'origine en vue d'optimiser le trajet dans le segment de trajet de départ (16), le bord d'origine prévu étant défini par les bords de départ du segment de trajet de destination ayant la résistance (R) la plus faible jusqu'au bord de destination et la résistance totale des bords d'origine étant fixée à la valeur déterminée à chaque fois pour le bord d'origine lors de l'optimisation du segment de trajet de destination et les résistances (R) en référence au segment de trajet de départ pour les bords (k) de la portion de trajet retenue (15) étant fixées à zéro.

**7.** Procédé selon l'une des revendications 4 à 6, **caractérisé en ce que** l'initialisation est à chaque fois effectuée au début de l'optimisation du segment de trajet de départ (16) et du segment de trajet de destination (17).

**8.** Procédé selon l'une des revendications précédentes, **caractérisé par** une détection d'état dans le tableau des trajets pour les bords (k) du segment de trajet retenu (15).

**9.** Procédé selon l'une des revendications précédentes, **caractérisé par** la mémorisation des bords (k) déjà optimisés dans une liste des bords.

**10.** Programme informatique comprenant des moyens de code de programme pour mettre en oeuvre le procédé selon l'une des revendications précédentes lorsque le programme est exécuté sur une unité de calcul.

**11.** Système de navigation comprenant une unité de calcul et comprenant un programme informatique pour mettre en oeuvre le procédé selon l'une des revendications 1 à 9.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

13

14

15

Fig. 17